Europäisches Patentamt

European Patent Office

Office européen des brevets

(11) Veröffentlichungsnummer: **0 509 362 A1**

## EUROPÄISCHE PATENTANMELDUNG

(21) Anmeldenummer: **92105940.8**

(22) Anmeldetag: **06.04.92**

(51) Int. Cl.5: **F16H 25/20, B61D 23/02**

(30) Priorität: **16.04.91 DE 4112425**

(43) Veröffentlichungstag der Anmeldung:
**21.10.92 Patentblatt 92/43**

(84) Benannte Vertragsstaaten:
**AT DE ES FR GB IT**

(71) Anmelder: **SIEMENS AKTIENGESELLSCHAFT**
**Wittelsbacherplatz 2**
**W-8000 München 2(DE)**

(72) Erfinder: **Pohr, Heinz, Dipl.-Ing. (FH)**
**Buchschwabacher Strasse 19**
**W-8501 Rosstal(DE)**

(54) **Mit einem elektrischen Drehantrieb in Antriebsverbindung bringbare Schwenkstufe.**

(57) Die Erfindung betrifft eine mit einem elektrischen Drehantrieb in Antriebsverbindung bringbare Schwenkstufe, die mit einem Verstellglied kuppelbar ist und eine mit einem Außengewinde versehene Verstellspindel (2) aufweist, auf der eine mit einem Innengewinde versehene, vom Drehantrieb antreibbare, drehbar gelagerte Spindelmutter (3) angeordnet ist, durch deren Drehungen die verdrehgesicherte Verstellspindel (2) axial in beiden Richtungen begrenzt verstellbar ist, bei welcher Schwenkstufe die Verstellspindel (2) in einem mit dem Gehäuse (1) des Drehantriebes verbindbaren Gehäuseteil (7 bzw.14) angeordnet ist. Hohe Drehmomente lassen sich bei einer solchen Schwenkstufe auf deren Abtriebsseite dadurch erreichen, daß in dem Gehäuseteil (7 bzw.14) ferner ein durch die axiale Bewegung der Verstellspindel (2) in Drehbewegung versetzbares Abtriebselement (10 bzw.15) angeordnet ist, welches mit dem Verstellglied kuppelbar ist.

EP 0 509 362 A1

Die Erfindung betrifft eine mit einem elektrischen Drehantrieb in Antriebsverbindung bringbare Schwenkstufe gemäß dem Oberbegriff des Anspruchs 1.

Eine solche Schwenkstufe ist durch die EP-A-0 379 612 bekannt. Bei dieser Schwenkstufe wird die Drehbewegung der Verstellspindel zum Verstellen eines Verstellgliedes direkt ausgenutzt. Hierdurch steht allerdings nur ein relativ geringes Drehmoment zur Verfügung.

Der Erfindung liegt nunmehr die Aufgabe zugrunde, eine derartige Schwenkstufe so auszugestalten, daß bei auszuführenden Dreh- oder Schwenkbewegungen ein wesentlich höheres Drehmoment aufgebracht werden kann.

Die Lösung der gestellten Aufgabe gelingt durch die im Kennzeichen des Anspruchs 1 angegebenen Merkmale. Dadurch, daß die Drehbewegung des Drehantriebs über die axiale Bewegung der Verstellspindel wieder in eine Drehbewegung umgesetzt wird, ergibt sich vom Drehantrieb bis zum Verstellglied ein wesentlich größerer Verstellweg, wodurch die gewünschte Erhöhung des Drehmoments erzielt wird.

Eine für einen rationellen Zusammenbau geeignete konstruktive Ausführungsform der Schwenkstufe ist im Anspruch 2 beschrieben.

Je nach der räumlichen Zuordnung von Schwenkstufe und Verstellglied kann es zweckmäßig sein, die mit dem Verstellglied zu koppelnde Abtriebswelle der Schwenkstufe entweder im rechten Winkel oder gleichachsig zu der Verstellspindel der Schwenkstufe herauszuführen. Durch die Merkmale des Anspruchs 3 wird eine rechtwinklige und durch die Merkmale des Anspruchs 4 eine gleichachsige Herausführung der Abtriebswelle erreicht.

Eine koaxiale Anordnung der Abtriebswelle zur Verstellspindel läßt sich bei einer Ausgestaltung des Stellantriebs gemäß den Merkmalen des Anspruchs 5 erreichen. Eine raumsparende Ausführung eines derartigen Stellantriebs ergibt sich nach den Merkmalen des Anspruchs 6.

Die in der Schwenkstufe unvermeidlich auftretenden Reibungsverluste lassen sich mit den in den Ansprüchen 7 und 8 beschriebenen Ausgestaltungen wesentlich reduzieren.

Anhand eines in der Zeichnung dargestellten Ausführungsbeispieles wird der Anmeldungsgegenstand nachfolgend näher beschrieben. Es zeigt:

FIG 1    einen Teilschnitt einer Schwenkstufe, bei der das Ende der Verstellspindel als Zahnstange ausgebildet ist und mit einem Stirnzahnrad zusammenwirkt,

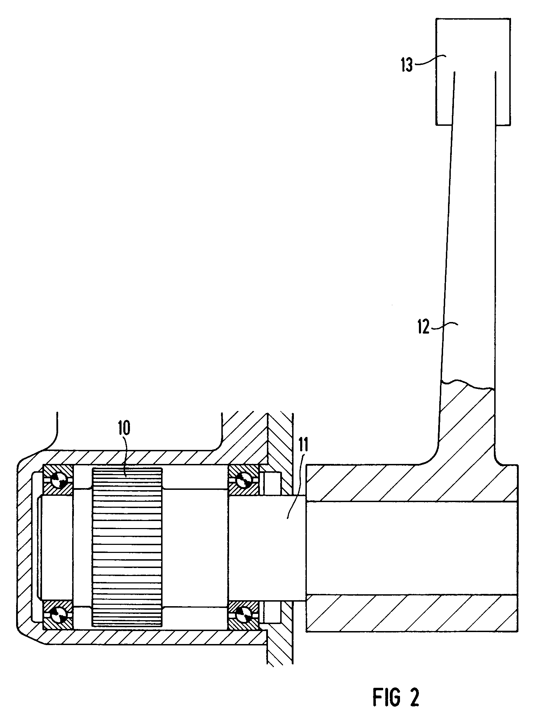

FIG 2    eine Schwenkstufe im Schnitt entlang der Linie II-II in FIG 1 und

FIG 3    einen Teilschnitt einer Schwenkstufe, bei der ein mit einer Innenschrägverzahnung versehenes Hohlritzel mit der Abtriebswelle verbunden ist und mit einem mit der Verstellspindel gekoppelten Gegenzahnrad zusammenwirkt.

Bei den dargestellten Ausführungsvarianten von Schwenkstufen wurde auf eine detaillierte Darstellung des jeweils mit der Schwenkstufe verbundenen Drehantriebes verzichtet, da ein solcher durch die EP-A-0 379 612 hinreichend bekannt ist.

Mit 1 ist das lediglich angedeutete Gehäuse eines solchen Drehantriebes bezeichnet.

Auf dem Außengewinde einer mit 2 bezeichneten Verstellspindel der Schwenkstufe ist eine mit einem Innengewinde versehene Spindelmutter 3 angeordnet, die mit einer die Verstellspindel 2 aufnehmenden, hohl ausgebildeten Antriebswelle 4 des Drehantriebes verbunden ist. Die Lagerung der Spindelmutter 3 erfolgt in einem zwischen dem Gehäuse 1 des Drehantriebes und dem Gehäuseteil 7 der Schwenkstufe eingefügten Gehäusering 7a. Hierzu sind beidseitig zu einem an der Spindelmutter 3 angeformten Ringbund 5 zwei Axiallager 6 angeordnet. Das eine Axiallager 6 stützt sich an einem Ringbund 7b des Gehäuseringes 7a ab. Das andere Axiallager 6 wird durch einen am Gehäuseteil 7 angeformten Ringansatz 7c in axialer Richtung in dem Gehäusering 7a gesichert. Damit ist die Spindelmutter 3 in axialer Richtung festgelegt. Durch die Lagerung der Spindelmutter 3 in dem gesonderten Gehäusering 7a ist ein einfacher Zusammenbau der Schwenkstufe gegeben.

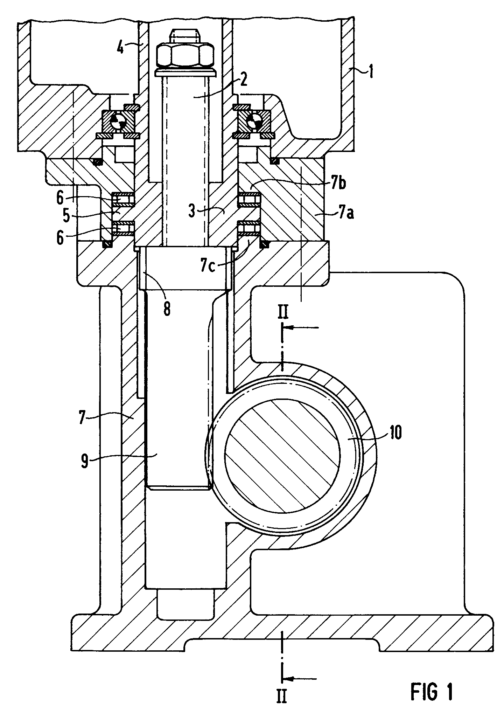

Wie die FIG 1 zeigt, ist in einem mit dem Gehäuse 1 des Drehantriebes verbindbaren, gesonderten Gehäuseteil 7 die Verstellspindel 2 mittels einer Längsverzahnung 8 verschiebbar geführt. Durch die Drehungen der Spindelmutter 3 wird die eingeschraubte Verstellspindel 2 in axialer Richtung verschoben, wobei diese Verschiebung je nach Drehrichtung der Spindelmutter 3 in der einen oder anderen Richtung erfolgt. Das im Gehäuseteil 7 befindliche Ende der Verstellspindel 2 ist als Zahnstange 9 ausgebildet. Über diese Zahnstange 9 treibt die Verstellspindel 2 ein im Gehäuseteil 7 drehbar gelagertes Stirnzahnrad 10 an. Dieses Stirnzahnrad 10 ist mit der Abtriebswelle 11 der Schwenkstufe verbunden. Auf dem nach außen herausgeführten Ende der Abtriebswelle 11 ist ein Schwenkarm 12 verdrehfest angeordnet. Mit dem freien Ende 13 des Schwenkarmes 12 kann ein durch eine Schwenkbewegung steuerbares Verstellglied gekoppelt werden.

Zum Steuern des Verstellgliedes wird der in der Zeichnung nicht dargestellte Antriebsmotor des Drehantriebes eingeschaltet. Dieser treibt über die Antriebswelle 4 die mit dieser verbundene Spindelmutter 3 in der einen oder anderen Drehrichtung an. Hierdurch wird die Verstellspindel 2 in der einen oder anderen axialen Richtung bewegt.

Durch die Längsverzahnung 8 wird eine Drehung der Verstellspindel 2 verhindert. Über die Zahnstange 9 wird das Stirnzahnrad 10 je nach Bewegungsrichtung der Verstellspindel 2 in der einen oder anderen Richtung gedreht und damit der auf der Abtriebswelle 11 angeordnete Schwenkarm 12 entsprechend verschwenkt.

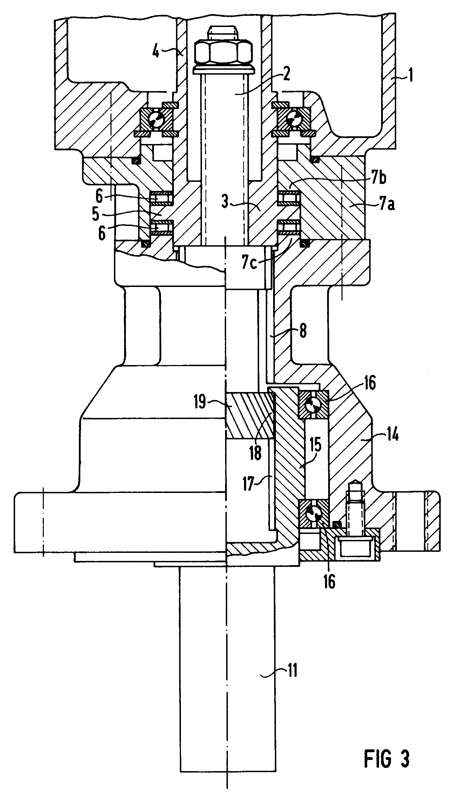

Die FIG 3 zeigt eine andere Ausführungsvariante einer Schwenkstufe. Auch bei dieser Variante ist die Verstellspindel 2 wiederum mittels einer Längsverzahnung 8 in einem gegenüber dem Gehäuseteil 7 anders gestalteten Gehäuseteil 14 längsverschieblich geführt und gleichzeitig gegen Verdrehen gesichert. Die Lagerung der Spindelmutter 3 ist in der gleichen Weise wie bei dem Ausführungsbeispiel nach FIG 1 ausgeführt. An dem im Gehäuseteil 14 befindlichen Ende der Abtriebswelle 11 der Schwenkstufe ist ein Hohlritzel 15 ausgebildet, welches durch zwei an seinem Außenumfang angeordnete Wälzlager 16 drehbar gelagert ist. Diese Wälzlager 16 bilden gleichzeitig die Lagerung der Abtriebswelle 11. Diese Lagerung ist so ausgebildet, daß das Hohlritzel 15 und damit die Abtriebswelle 11 in axialer Richtung unbeweglich gehalten sind.

An der Innenseite des Hohlritzels 15 ist eine Schrägverzahnung 17 vorgesehen. In diese Schrägverzahnung 17 greift ein mit einer entsprechenden Außenverzahnung 18 versehenes und mit der Verstellspindel 2 verbundenes Gegenzahnrad 19 ein.

Wird bei dieser Schwenkstufe die Spindelmutter 3 durch die Antriebswelle 4 des Drehantriebes in Drehung versetzt, dann wird die Verstellspindel 2 entsprechend der jeweiligen Drehrichtung der Spindelmutter 3 auf- oder abbewegt. Die Längsverzahnung 8 läßt eine solche Bewegung zu, wohingegen eine Drehung der Verstellspindel 2 durch die Längsverzahnung 8 verhindert wird. Entsprechend der Bewegung der Verstellspindel 2 wird das mit ihr verbundene Gegenzahnrad 19 mit seiner Außenverzahnung 18 in der Innenschrägverzahnung 17 des Hohlritzels 15 entlanggeführt. Da das Hohlritzel 15 axial festgelegt ist, wird die axiale Bewegung des Gegenzahnrades 19 über die Schrägverzahnung 17 in eine Drehbewegung des Hohlritzels 15 umgewandelt. Über den mit der Abtriebswelle 11 verbundenen Schwenkarm 12 kann somit wieder ein entsprechendes Verstellglied betätigt werden.

Zur Verminderung von Reibungsverlusten kann die Verzahnung zwischen dem Gegenzahnrad 19 und dem Hohlritzel 15 auch als Kugelgewindetrieb ausgebildet werden. Ebenso kann anstelle einer Verstellspindel 2 der Spindelmutter 3 ein entsprechender Kugelgewindetrieb vorgesehen werden.

**Patentansprüche**

1. Mit einem elektrischen Drehantrieb in Antriebsverbindung bringbare Schwenkstufe, die mit einem Verstellglied kuppelbar ist und eine mit einem Außengewinde versehene Verstellspindel (2) aufweist, auf der eine mit einem Innengewinde versehene, von dem Drehantrieb antreibbare, drehbar gelagerte Spindelmutter (3) angeordnet ist, durch deren Drehungen die verdrehgesicherte Verstellspindel (2) axial in beiden Richtungen begrenzt verstellbar ist, bei welcher Schwenkstufe die Verstellspindel (2) in einem mit dem Gehäuse (1) des Drehantriebes verbindbaren Gehäuseteil (7 bzw.14) angeordnet ist,
**dadurch gekennzeichnet,**
daß in dem Gehäuseteil (7 bzw.14) ferner ein durch die axiale Bewegung der Verstellspindel (2) in Drehbewegung versetzbares Abtriebselement (10 bzw.15) angeordnet ist, welches mit dem Verstellglied kuppelbar ist.

2. Schwenkstufe nach Anspruch 1,
**dadurch gekennzeichnet,**
daß die Spindelmutter (3) in einem zwischen dem Gehäuseteil (7 bzw.14) und dem Gehäuse (1) des Drehantriebs eingefügten Gehäusering (7a) axial fest gelagert ist.

3. Schwenkstufe nach Anspruch 1 oder 2,
**dadurch gekennzeichnet,**
daß das Abtriebselement ein Stirnzahnrad (10) ist, das mit dem als Zahnstange (9) ausgebildeten Ende der Verstellspindel (2) kämmt.

4. Schwenkstufe nach Anspruch 1 oder 2,
**dadurch gekennzeichnet,**
daß in dem Gehäuseteil (14) eine Abtriebswelle (11) gleichachsig zur Verstellspindel (2) angeordnet und drehbar gelagert ist, daß mit der Abtriebswelle (11) ein mit einer Schrägverzahnung (17) versehenes Zahnrad (15) verbunden ist, das mit einem mit der Verstellspindel (2) verbundenen, mit einer entsprechenden Schrägverzahnung (18) versehenen Gegenzahnrad (19) zusammenwirkt.

5. Schwenkstufe nach Anspruch 4,
**dadurch gekennzeichnet,**
daß an dem im Gehäuseteil (14) liegenden Ende der Abtriebswelle (11) als Zahnrad ein mit einer Innenschrägverzahnung (17) versehenes Hohlritzel (15) angeordnet ist, dessen axiale Erstreckung dem axialen Verstellweg der Verstellspindel (2) angepaßt ist.

6. Schwenkstufe nach Anspruch 5,
**dadurch gekennzeichnet,**

daß die Abtriebswelle (11) mittels zweier im axialen Abstand am Außenumfang des Hohlritzels (15) angeordneter Wälzlager (16) im Gehäuseteil (14) gelagert ist.

7.  Schwenkstufe nach einem oder mehreren der vorhergehenden Ansprüche, **dadurch gekennzeichnet,**
    daß die Verstellspindel (2) und die Spindelmutter (3) als Kugelgewindetrieb ausgebildet sind.

8.  Schwenkstufe nach Anspruch 4, 5 oder 6, **dadurch gekennzeichnet,**
    daß das Gegenzahnrad (19) und das Hohlritzel (15) als Kugelgewindetrieb ausgebildet sind.

FIG 1

FIG 2

FIG 3

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| | **EINSCHLÄGIGE DOKUMENTE** | | EP 92105940.8 |
| Y | DE - C - 888 945 (MILL-COCHRANE) * Fig. 4,5; Seite 4, Zeilen 73-114 * -- | 1-3,7 | F 16 H 25/20 B 61 D 23/02 |
| Y | US - A - 4 275 664 (REDDY) * Spalte 4, Zeilen 30-36 * -- | 1-3,7 | |
| A | US - A - 2 791 128 (GEYER et al.) * Gesamt * -- | 1,4 | |
| A | EP - A - 0 242 521 (WITTENSTEIN) * Fig. 4,5; Zeilen 1-29 * -- | 1,3,7 | |
| D,A | EP - A - 0 379 612 (SIEMENS) * Gesamt * -- | 1 | |
| A | EP - A - 0 386 771 (R.G.B. S.p.a.) -- | | RECHERCHIERTE SACHGEBIETE (Int. Cl.⁵) B 60 R 3/00 B 61 D 23/00 B 62 D 25/00 F 16 H 19/00 F 16 H 25/00 F 16 H 37/00 |
| A | GB - A - 2 190 459 (USM CORP.) ---- | | |

Der vorliegende Recherchenbericht wurde für alle Patentansprüche erstellt.

| Recherchenort | Abschlußdatum der Recherche | Prüfer |
|---|---|---|
| WIEN | 28-07-1992 | BAUMANN |